**Europäisches Patentamt**

**European Patent Office**

**Office européen des brevets**

(11) Numéro de publication: **0 010 047**
**B1**

(12) ## FASCICULE DE BREVET EUROPEEN

(45) Date de publication du fascicule du brevet: **29.01.86**

(21) Numéro de dépôt: **79400717.9**

(22) Date de dépôt: **05.10.79**

(51) Int. Cl.⁴: **C 21 C 5/38,** C 21 B 3/04, C 22 B 7/02

(54) **Procédé de traitement des fumées sidérurgiques.**

(30) Priorité: **09.10.78 FR 7828961**

(43) Date de publication de la demande:
**16.04.80 Bulletin 80/08**

(45) Mention de la délivrance du brevet:
**29.01.86 Bulletin 86/05**

(84) Etats contractants désignés:
**BE DE GB IT SE**

(56) Documents cités:
**BE-A- 654 107**
**DE-C- 658 356**
**FR-A-1 406 062**
**FR-A-2 307 876**
**FR-A-2 362 669**
**LU-A- 73 039**

(73) Titulaire: **AIR INDUSTRIE**
**19-21 avenue Dubonnet**
**F-92401 Courbevoie (FR)**

(72) Inventeur: **Billard, François**
**3, rue Blaise-Desgoffe**
**F-75006 Paris (FR)**

(74) Mandataire: **Picard, Jean-Claude Georges et al**
**Cabinet Plasseraud 84, rue d'Amsterdam**
**F-75009 Paris (FR)**

Courier Press, Leamington Spa, England.

## Description

La présente invention est relative à un procédé de traitement de fumées sidérurgiques, comprenant un gaz porteur, des poussières de fer et d'oxydes de fer et des métaux non ferreux sous forme de vapeur, lesdites fumées étant à une température plus élevée que la température de vaporisation desdits métaux non ferreux.

Il pourra s'agir notamment des fumées provenant de hauts fourneaux, fours électriques, convertisseurs ou cubilots.

Les fumées sidérurgiques sont constituées généralement d'un gaz porteur réducteur formé, en particulier, par de l'oxyde de carbone, du gaz carbonique, du méthane et de l'hydrogène, de poussières de fer et de différents oxydes de fer. Ces fumées contiennent souvent des métaux non ferreux, tels que, par exemple du zinc et du plomb.

Comme la température de ces fumées est très élevée (supérieure à 1000°C), ces métaux non ferreux se présentent sous forme de vapeur mélangée au gaz porteur réducteur.

Bien entendu, ces fumées sidérurgiques fortement chargées en poussières de fer et d'oxydes de fer, ne peuvent être rejetées directement à l'atmosphère, en raison de la pollution que ces rejets créeraient.

C'est pourquoi on réalise un captage des poussières avant rejet des fumées dans l'atmosphère.

Ce captage des poussières est, à la manière connue, effectué tout d'abord par un dépoussiérage par voie humide, par exemple par pulvérisation d'eau dans les fumées, puis ensuite par captage électrostatique dans des électro-filtres ou dépoussiéreurs électrostatiques. Cette technique de captage par voie humide provoque un abaissement de la température des fumées tel que les vapeurs de métaux non ferreux contenues dans ces fumées sont solidifiées. Il y a donc alors mélange des poussières de fer et d'oxydes de fer et de métaux non ferreux solides.

Ainsi, après dépoussiérage par voie humide et par captage des plus fines particules par voie électrostatique, on obtient d'une part le gaz porteur qui peut être rejeté à l'atmosphère, et d'autre part des poussières constituées de fer et d'oxydes de fer, et de métaux non ferreux.

Comme la teneur en métaux non ferreux est relativement faible, la séparation, en phase solide, des métaux non ferreux, du fer et des oxydes de fer, n'est pas effectuée actuellement, en raison du prix de revient élevé du processus de séparation à partir de matériaux en phases solides.

Ces poussières de fer et d'oxydes de fer et de métaux non ferreux n'étant pas séparées, no peuvent être utilisées et sont stockées sur des décharges en créant des nuisances.

Le document DE—C—658 356 décrit un procédé de traitement de fumées de haut-fourneau, permettant de recueillir d'une part une fraction riche en fer et manganèse et ne contenant pas de zinc et, d'autre part, une poussière riche en zinc.

Selon, ce procédé, on insère, entre le haut-fourneau et l'appareil d'épuration par voie humide, plusieurs séparateurs à fonctionnement à sec ou des cyclones pour que, lors du refroidissement du gaz, soit séparée à l'état sec assez de poussière ferrifère lourde pour que, dans l'épuration par voie humide, on obtienne une très fine poussière pauvre en fer, mais riche en zinc.

La présente invention a pour but de résoudre le problème, de la séparation entre le fer et les oxydes de fer d'une part, et les métaux non ferreux d'autre part.

A cet effet, un procédé du type mentionné au début est, conformément à l'invention, essentiellement caractérisé en ce que l'on effectue les différentes opérations successives suivantes:

on effectue, tandis que les fumées sont encore à température élevée, et donc sans refroidissement notable de ces fumées, une première séparation à sec entre d'une part les poussières de fer et d'oxydes de fer et d'autre part ledit gaz porteur mélangé auxdits métaux non ferreux sous forme de vapeur;

on refroidit ledit gaz porteur et les métaux non ferreux jusqu'à une température inférieure à la température de solidification des métaux non ferreux, de sorte que ce refroidissement du gaz porteur produit la solidification des métaux non ferreux; et

on effectue une seconde séparation entre le gaz porteur refroidi et les métaux non ferreux solidifiés.

Grâce à l'invention, on peut récupérer d'une part les poussières de fer et d'oxydes de fer lors de leur séparation à chaud des fumées, et d'autre part les métaux non ferreux lors de leur séparation après solidification par refroidissement. Ainsi le fer et les oxydes de fer d'une part et les métaux non ferreux d'autre part séparés peuvent être réutilisés.

D'autres caractéristiques de l'invention résident dans le fait que:

— la séparation à chaud des poussières de fer et d'oxydes de fer est réalisée par contact direct avec des particules solides,
— le refroidissement du gaz porteur et des vapeurs de métaux non ferreux est réalisé par contact indirect avec un fluide.

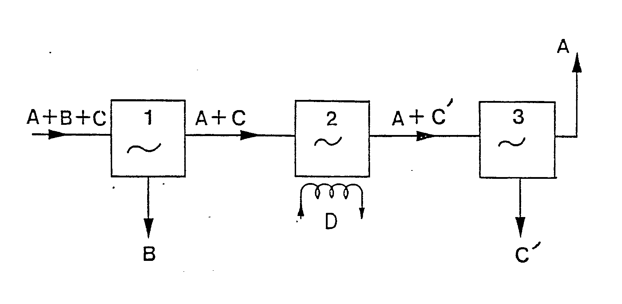

D'autres caractéristiques et avantages de l'invention apparaîtront au cours de la description qui va suivre, avec référence à la figure unique du dessin annexé, qui est une représentation schématique du procédé selon l'invention, donnée à titre d'exemple.

On supposera dans ce qui suit qu'il s'agit du traitement des fumées provenant d'un convertisseur sidérurgique.

Ces fumés à hautes températures, généralement supérieures à 1000°C, sont constituées, en particulier, d'oxyde de carbone, de gaz carbonique, de méthane, d'hydrogène, formant la gaz porteur réducteur A, de poussières B de fer et de différents oxydes de fer tels que, par exemple,

2

FeO, Fe$_2$O$_3$, Fe$_3$O$_4$, et de vapeurs de métaux non ferreux C, tels que du zinc et du plomb.

Suivant l'exemple représenté à la figure unique, ces fumées sont amenées à un premier dispositif 1 de séparation, à chaud, où l'on sépare les poussières de fer et des différents oxydes de fer du gaz porteur et des vapeurs de métaux non ferreux. Ce gaz porteur A et ces vapeurs C sont ensuite refroidis par contact indirect avec un fluide D, tel que de l'eau, dans un dispositif de refroidissement ou d'échange thermique 2.

Les fumées provenant du dispositif de refroidissement, à une température inférieure à 325°C, sont constituées du gaz porteur réducteur A et des métaux non ferreur C' sous forme solide. Ces fumées sont alors amenées à un second dispositif 3 de séparation, à froid, où l'on sépare les métaux non ferreux C' du gaz porteur A. Ainsi, on peut rejeter à l'atmosphère le gaz porteur A ou le réutiliser comme gaz de combustion.

Ainsi, lors de la première séparation, à chaud, on récupère les poussières de fer ou d'oxydes de fer, tandis qu'à la seconde séparation, à froid, on récupère les métaux non ferreux sous forme solide.

Le premier dispositif de séparation 1, à chaud, peut être un dispositif de captage des fumées, dans lequel les fumées sont mises en contact avec des particules solides, ces particules captant les poussières de fer et d'oxydes de fer.

Le dispositif de refroidissement ou d'échange thermique 2, peut être avantageusement un échangeur de chaleur à plaques ou tubes dans lequel, le gaz porteur est mis en contact avec une paroi refroidie par le fluide D. Il n'y a pas alors contact direct entre le fluide D et les fumées.

Le second dispositif de séparation à froid peut avantageusement être un filtre à manches ou un dépoussièreur électrostatique (ou électrofiltre).

Grâce à l'invention, on arrive à obtenir de manière simple un captage sélectif des produits contenus dans les fumées sidérurgiques. C'est ainsi que tout en évitant le rejet de fumées polluantes dans l'atmosphère, on récupère d'une part des poussières de fer et d'oxydes de fer et d'autre part des métaux non ferreux.

Ces poussières de fer et d'oxydes de fer peuvent alors être réutilisées directement ou en les agglomérant, dans les fours sidérurgiques.

Les métaux non ferreux, sous forme solide, sont également facilement réutilisables.

La première séparation à chaud des poussières d'oxydes de fer permet l'utilisation, pour le refroidissement, d'un échangeur de chaleur à contact indirect, car ces poussières déjà éliminées ne peuvent venir se déposer contre les parois de cet échangeur. Ainsi, le fluide D, de l'eau par exemple, n'étant pas au contact des fumées, récupère la chaleur cédée par les fumées lors de leur refroidissement. Cette chaleur peut être conduite à un lieu d'utilisation par le fluide de refroidissement.

Le procédé selon l'invention peut être appliqué et mis en oeuvre en particulier dans les usines sidérurgiques pour le traitement des fumées réductrices de hauts fourneaux, de fours électriques, de convertisseurs ou de cubilots.

## Revendications

1. Procédé de traitement de fumées sidérurgiques, comprenant un gaz porteur, des poussières de fer et d'oxydes de fer et des métaux non ferreux sous forme de vapeur, lesdites fumées étant à une température plus élevée que la température de vaporisation desdits métaux non ferreux, caractérisé en ce que l'on effectue les différentes opérations successives suivantes:

on effectue, tandis que les fumées sont encore à température élevée, et donc sans refroidissement notable de ces fumées, une première séparation à sec entre d'une part les poussières de fer et d'oxydes de fer et d'autre part ledit gaz porteur mélange auxdits métaux non ferreux sous forme de vapeur;

on refroidit ledit gaz porteur et les métaux non ferreux jusqu'à une température inférieure à la température de solidification des métaux non ferreux, de sorte que ce refroissement du gaz porteur produit la solidification des métaux non ferreux; et

on effectue une seconde séparation entre le gaz porteur refroidi et les métaux non ferreux solidifiés.

2. Procédé de traitement selon la revendication 1, caractérisé en ce que l'on sépare, à chaud, les poussières d'oxydes de fer, par contact direct avec des particules solides.

3. Procédé de traitement selon les revendications 1 ou 2, caractérisé en ce qu'on refroidit le gaz porteur et les vapeurs de métaux non ferreux par contact indirect avec un fluide.

## Patentansprüche

1. Verfahren zur Behandlung der in der Eisenhütten-Industrie entstehenden Abgase, die ein Trägergas, Eisen- und Eisenoxidstäube und Nichteisenmetalle in Form von Dampf enthalten, wobei die Abgase eine höhere Temperatur aufweisen als die Verdampfungstemperatur der Nichteisenmetalle, dadurch gekennzeichnet, daß man die folgenden unterschiedlichen Operationen nacheinander ausfuhrt:

während die Abgase noch erhöhte Temperatur aufweisen, und daher ohne beachtliche Abkühlung dieser Abgase, führt man eine erste Trockentrennung zwischen einerseits den Eisen- und Eisenoxidstäuben und andererseits dem mit den Nichteisenmetallen in Form von Dampf vermischten Trägergas durch;

man kühlt das Trägergas und die Nichteisenmetalle bis aud eine Temperatur ab, die niedriger liegt als die Verfestigungstemperatur der Nichteisenmetalle, so daß diese Abkühlung des Trägergases die Verfestigungs der Nichteisenmetalle erzeugt; und

man führt eine zweite Trennung zwischen dem agbekühlten Trägergas und den verfestigten Nichteisenmetallen durch.

2. Verfahren zur Behandlung nach Anspruch 1, dadurch gekennzeichnet, daß man die Eisenoxidstäube warm durch direkten Kontakt mit Feststoffpartikeln trennt.

3. Verfahren zur Behandlung nach den Ansprüchen 1 oder 2, dadurch gekennzeichnet, daß man das Trägergas und die Nichteisenmetalldämpfe durch indirekten Kontakt mit einem Fluid abkühlt.

## Claims

1. A process for the treatment of fumes in iron and steel works, comprising a vehicle gas, dusts of iron and iron oxides and non-ferrous metals in the form of a vapour, the said fumes being at a higher temperature than the vaporization temperature of said non-ferrous metals, characterised in that the following successive operations are carried out:

while the fumes are still at high temperature and therefore without appreciable cooling of said fumes a first separation is carried out in the dry state between, on the one hand, the dusts of iron and iron oxides and, on the other hand, the said vehicle gas mixed with the said non-ferrous metals in vapour form;

the said vehicle gas and non-ferrous metals are cooled to a temperature below the solidification temperature of the non-ferrous metals so that this cooling of the vehicle gas results in solidification of the non-ferrous metals; and

a second separation is carried out between the cooled vehicle gas and the solidified non-ferrous metals.

2. A treatment process according to claim 1, characterised in that the dusts of iron oxides are separated in the hot state by direct contact with solid particles.

3. A treatment process according to claim 1 or 2, characterised in that the vehicle gas and the non-ferrous metal vapours are cooled by indirect contact with a fluid.

A+B+C →  [ 1 ～ ]  A+C →  [ 2 ～ ]  A+C′ →  [ 3 ～ ]  A ↑

[1] → B

[2] ～ D

[3] → C′